# EUROPÄISCHE PATENTSCHRIFT

(11) **EP 2 533 074 B1**
(45) Veröffentlichungstag und Bekanntmachung des Hinweises auf die Patenterteilung: **07.11.2018**
(21) Anmeldenummer: 12003821.1
(22) Anmeldetag: 15.05.2012
(51) Int. Cl.: G01W 1/02, F21V 23/04

(54) **Bewegungsmelder mit Wetterdatenauswertung**
Motion sensor with weather data evaluation
Détecteur de mouvement avec exploitation de données météorologiques

(30) Priorität: 11.06.2011 DE 102011104028
(43) Veröffentlichungstag der Anmeldung: 12.12.2012
(73) Patentinhaber: ABB AG, 68309 Mannheim (DE)
(72) Erfinder: Schallenberg, Wolfgang, 40599 Düsseldorf (DE); Wieske, Stefan, 58285 Gevelsberg (DE); Lehnert, Christian, 58239 Schwerte (DE)

(56) Entgegenhaltungen:
- WO-A1-2008/128443
- WO-A1-2011/037475
- DE-A1-102004 058 050

## Beschreibung

Die Erfindung betrifft einen Bewegungsmelder mit Wetterdatenauswertung. Bevorzugte Anwendungsgebiete sind im Außenbereich von Gebäuden, bei öffentlichen Gebäuden und Plätzen und im Wohnbereich gegeben.

Bewegungsmelder, insbesondere in Form eines Passiv-Infrarot-Bewegungsmelders ausgeprägt, zum Einschalten einer Beleuchtung oder zum Auslösen eines Alarms sind allgemein in vielfältiger Ausgestaltung bekannt, beispielsweise als Aufputzgerät mit variabler Verstellbarkeit oder als in ein bestehendes Installationsgeräteprogramm integrierbares Unterputzgerät, für den Außenbereich oder für den Innenbereich.

Aus der DE 102004058 050 A1 ist eine Vorrichtung zur Erfassung und Anzeige einer Temperatur bekannt, wobei ein von einem Bewegungsmelder ermittelter temperatur-Messwert drahtlos über einen Sender an eine Temperatur-Anzeigevorrichtung mit zugeordnetem Empfänger übertragen wird.

In der WO 2008/128443 A1 ist eine Solarlampe beschrieben, deren verschiedenfarbige LED's über einen Prozessor in Abhängigkeit von bestimmten Umweltbedingungen Licht in verschiedenen Farben abgeben.

Der Erfindung liegt die Aufgabe zugrunde, einen optimierten Bewegungsmelder mit erweiterter Funktionalität anzugeben.

Diese Aufgabe wird erfindungsgemäß gelöst durch einen Bewegungsmelder mit Wetterdatenauswertung, mit einer Bewegungsmelder-Erfassungseinheit und einer Steuereinheit, welche an eine Spannungsversorgung angeschlossen sind,
- wobei die Steuereinheit in Abhängigkeit von eingangsseitig zugeführten Wetterdaten ein Farbsignal für die in Abhängigkeit einer detektierten Bewegung erfolgende Ansteuerung mindestens eines Farblichts erzeugt,
- wobei die Wetterdaten zumindest die aktuelle Temperatur, den aktuellen Luftdruck, die aktuelle Luftfeuchtigkeit und Prognosewerte für die zukünftige Entwicklung dieser Werte beinhalten, welche auf den Werten der Vergangenheit basieren.

Dabei sind Lichtsysteme allgemein bekannt, die in Abhängigkeit der Tageszeit in der Lage sind, mittels Farblichtsteuerung von z. B. LED/RGB-Leuchtmitteln (RGB-Farbraum, durch additives Mischen der Grundfarben Rot, Grün, Blau mittels Leuchtdioden nachgebildet) ein "künstliches" Tageslicht zu erzeugen. Weiterhin sind Farblichtsteuerungssysteme bekannt, die über eine manuelle Steuerung oder in Abhängigkeit von festgelegten Szenarien bestimmte Lichtatmosphären schaffen. Im Zusammenhang mit Tageslichtsituationen werden Lichtsysteme genutzt, um Gefahrensituationen zu vermeiden, wie beispielsweise die Ausleuchtung von Treppenhäusern, Wegen oder Tiefgaragen bei Dunkelheit.

Im Bereich der Armaturhersteller für den Badbereich ist eine farbenfrohe Darstellung des Nassguts in der Ausschüttungsphase allgemein bekannt. Wasser wird effektvoll in Szene gebracht, wie beispielsweise blaues Licht für Kaltwasser oder rötliches Licht für Warmwasser, um eine Person auf eine mögliche Gefahr vorsorglich hinzuweisen, d. h. ein Verbrühen zu vermeiden.

Die mit der Erfindung erzielbaren Vorteile liegen insbesondere darin, dass durch Bezugnahme des Bewegungsmelders auf konkrete Wetterdaten durch eine kombinatorische Zusammenführung von Lichtgestaltung und Wetterdaten in der Beleuchtungstechnik allgemein sowie in der Gebäudesystemtechnik speziell vor bestimmten Gefahren in Bezug auf die aktuelle und insbesondere auch prognostizierte Wetterlage (Vorhersage) gewarnt werden kann. Im Unterschied zu einem rein auf die aktuelle Temperatur (Außentemperatur) bezogenen Anzeige-/Warnsystem können Warnungen bereits Stunden / Tage vor dem Eintreten einer bestimmten Gefahr erfolgen, beispielsweise
- bei drohendem gefrierendem Regen,
- bei drohendem unterkühlten Regen (Eisregen),
- bei drohendem Starkregen, Gewitter und "Wolkenbruch",
- bei drohendem Hagel,
- bei drohendem Sturm.

Das Farblicht ist in Form eines LED/RGB-Leuchtmittels inklusive zugehörigem Controller ausgebildet.

Die Erzeugung / Bereitstellung der Wetterdaten erfolgt mit Hilfe von Wettersensoren, wie Temperatursensor, Luftfeuchtigkeitssensor und Luftdrucksensor sowie optional Regensensor. Die Erfindung realisiert eine Integration der Bewegungsmelder-Erfassungseinheit, der Steuereinheit, der Spannungsversorgung und der Wettersensoren in einem einzigen Gerät, dem Bewegungsmelder.

Die Erzeugung/Bereitstellung der Wetterdaten kann alternativ mit Hilfe mindestens eines Wetterdatendienst-Funkempfängers oder mit Hilfe eines online-Wetterdienstes erfolgen.

Der Empfang der Wetterdaten kann alternativ über ein kabelgebundenes Bussystem oder über ein funkbasiertes Bussystem über einen Busanschluss erfolgen.

Die Ansteuerung des mindestens einen Farblichts mit dem Farbsignal kann über einen Busanschluss und über ein kabelgebundenes Bussystem erfolgen.

Zwischen der Steuereinheit und dem mindestens einen Farblicht kann ein Schaltglied angeordnet sein. Des Weiteren kann ein Schaltglied zur Auslösung in Abhängigkeit einer detektierten Bewegung und unabhängig von Wetterdaten vorgesehen sein, beispielsweise für eine Alarmauslösung, für eine Einbruchmeldung, für eine Lüftung/Heizungs-Ansteuerung, für eine Kamera-Aktivierung usw.

Weitere vorteilhafte Weiterbildungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: ein Prinzipbild einer ersten Ausführungsform eines Bewegungsmelders mit Wetterdatenauswertung,
- Fig. 2: ein Prinzipbild einer zweiten Ausführungsform eines Bewegungsmelders mit Wetterdatenauswertung,
- Fig. 3: eine Ausführungsform mit in einem Bewegungsmelder integriertem Farblicht,
- Fig. 4: eine Ausführungsform mit Bewegungsmelder und externem Farblicht,
- Fig. 5: eine Ausführungsform mit im Bewegungsmelder integrierten Wettersensoren,
- Fig. 6: eine Ausführungsform mit im Bewegungsmelder integriertem Wetterdaten-Funkempfänger,
- Fig. 7: eine Ausführungsform mit über ein Bussystem mit dem Bewegungsmelder verbundenen externen Wettersensoren,
- Fig. 8: eine Ausführungsform mit über ein Bussystem mit dem Bewegungsmelder verbundenem Wetterdatendienst-Funkempfänger,
- Fig. 9: eine Ausführungsform mit über ein Bussystem mit dem Bewegungsmelder verbundenem online-Wetterdienst,
- Fig. 10: eine Ausführungsform mit dem Bewegungsmelder und hierzu externen Wettersensoren,
- Fig. 11: eine Ausführungsform mit Spannungsversorgung aus einem 230V-Wechselspannungsnetz,
- Fig. 12: eine Spannungsversorgung mittels Batterie.

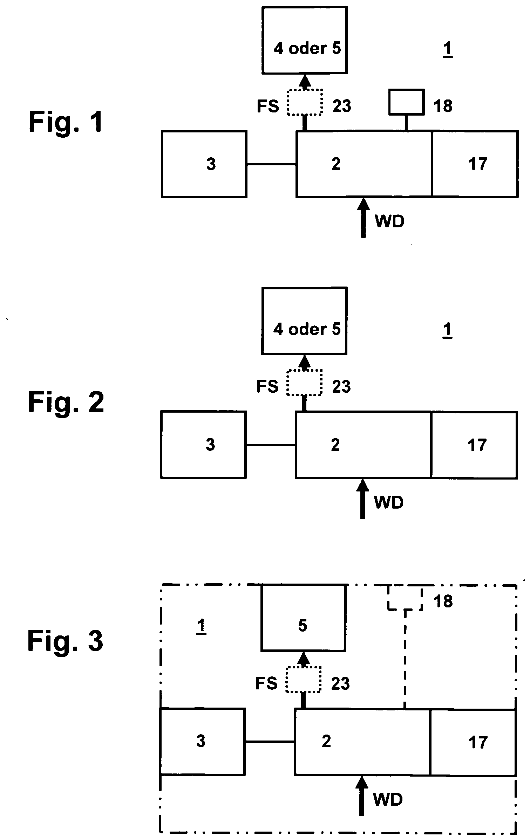

In Fig. 1 ist ein Prinzipbild einer ersten Ausführungsform eines Bewegungsmelders mit Wetterdatenauswertung dargestellt. Der Bewegungsmelder 1 besitzt eine Bewegungsmelder-Erfassungseinheit 17 mit Optik/Spiegel (inklusive Fresnellinse), Bewegungssensor (vorzugsweise PIR-Sensor), Tageslichtsensor, Dämmerungsschalter und Zeitglied. Der Dämmerungsschalter sorgt dafür, dass das Bewegungsmeldersignal erst dann verarbeitet wird, wenn das voreingestellte Helligkeitsniveau bzw. der entsprechende Lichtwert unterschritten wird. Das Zeitglied bildet die gewünschte Ausschaltverzögerung nach, während der ein Schaltvorgang aufrechterhalten werden soll. Wird vor dem Ende der Ausschaltverzögerung eine erneute Bewegung im Erfassungsbereich registriert, erfolgt ein "Nachtriggern", d. h. die eingestellte Ausschaltverzögerung beginnt bei jeder erkannten Bewegung neu.

Es ist des Weiteren eine an eine Spannungsversorgung 3 angeschlossene Steuereinheit 2 zu erkennen, welche eingangsseitig Wetterdaten WD empfängt und in Abhängigkeit dieser aktuellen Wetterdaten WD mindestens ein Farblicht 4 oder 5, vorzugsweise ein LED/RGB-Leuchtmittel, mittels eines Farbsignals FS in Abhängigkeit einer detektierten Bewegung ansteuert. Optional erfolgt die Ansteuerung des Farblichts über ein Schaltglied 23. Die Wetterdaten WD beinhalten zumindest die aktuelle Temperatur, den aktuellen Luftdruck, die aktuelle Luftfeuchtigkeit und Prognosewerte für die zukünftige Entwicklung dieser Werte, welche auf den Werten der Vergangenheit basieren.

Während das Schaltglied 23 zur Auslösung einer Schalthandlung abhängig von Wetterdaten WD dient, ist der Bewegungsmelder 1 mit einem weiteren Schaltglied 18 versehen, welches zur Auslösung einer Schalthandlung abhängig von einer Bewegungsdetektion, jedoch unabhängig von Wetterdaten dient, beispielsweise für eine Alarmauslösung, für eine Einbruchmeldung, für eine Lüftung/Heizungs-Ansteuerung, für eine Kamera-Aktivierung usw.

Zweckmäßig werden Steuereinheit 2 und die elektronischen Baukomponenten der Bewegungsmelder-Erfassungseinheit 17 mittels eines einzigen Mikroprozessors realisiert dessen Energieversorgung über die Spannungsversorgung 3 erfolgt.

In Fig. 2 ist ein Prinzipbild einer zweiten Ausführungsform eines Bewegungsmelders mit Wetterdatenauswertung dargestellt. Im Unterschied zur ersten Ausführungsform des Bewegungsmelders gemäß Fig. 1 entfällt das Schaltglied 18 zur Auslösung einer Schalthandlung unabhängig von den Wetterdaten WD.

In Fig. 3 ist eine Ausführungsform mit im Bewegungsmelder integriertem Farblicht dargestellt. Hierdurch wird ein sich aus der Spannungsversorgung 3, der Steuereinheit 2, der Bewegungsmelder-Erfassungseinheit 17, mindestens einem Farblicht 5 und dem Schaltglied 23 zusammensetzender Bewegungsmelder 1 gebildet, wobei das Farblicht 5 entsprechend den aktuellen Wetterdaten WD mittels des Farbsignals FS angesteuert wird. Des Weiteren kann optional das Schaltglied 18 vorhanden sein.

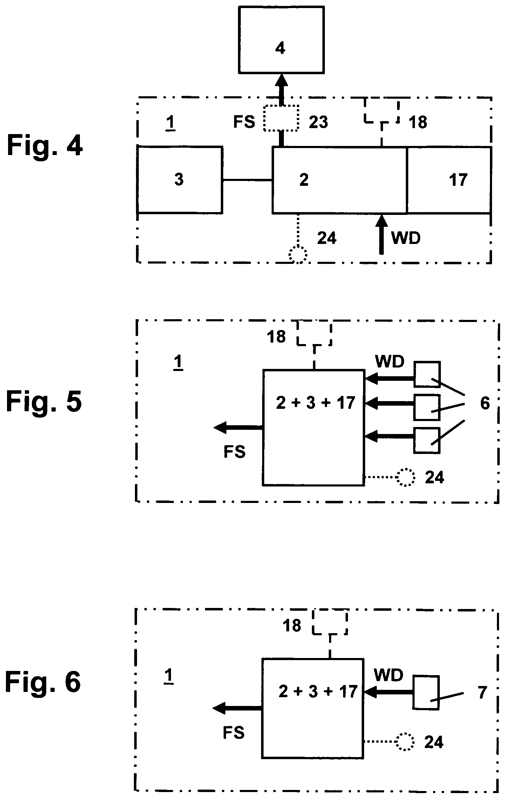

In Fig. 4 ist eine Ausführungsform mit Bewegungsmelder und externem Farblicht dargestellt. Es wird ein sich aus der Spannungsversorgung 3, der Steuereinheit 2, der Bewegungsmelder-Erfassungseinheit 17 und dem Schaltglied 23 zusammensetzender Bewegungsmelder 1 gebildet, welcher ausgangsseitig mindestens ein externes Farblicht 4 entsprechend den aktuellen Wetterdaten WD ansteuert. Optional steuert die Steuereinheit 2 zusätzlich ein internes Signalmittel 24 des Bewegungsmelders 1, vorzugsweise eine Signallampe oder eine LED oder ein RGB-Leuchtmittel mittels des Farbsignals FS an. Des Weiteren kann optional das Schaltglied 18 vorhanden sein.

In Fig. 5 ist eine Ausführungsform mit im Bewegungsmelder integrierten Wettersensoren dargestellt. Bei dieser Ausführungsform sind für die Erzeugung von Wetterdaten WD dienenden Wettersensoren 6 - Temperatursensor, Luftdrucksensor und Luftfeuchtesensor - im Bewegungsmelder 1 integriert und unmittelbar mit der Steuereinheit 2 inklusive Bewegungsmelder-Erfassungseinheit 17 verbunden. Des Weiteren können optional das Schaltglied 18 und/oder das interne Signalmittel 24 vorhanden sein.

In Fig. 6 ist eine Ausführungsform mit im Bewegungsmelder integriertem Wetterdaten-Funkempfänger dargestellt. Bei dieser Ausführungsform ist ein für die Lieferung von Wetterdaten WD dienender Wetterdatendienst-Funkempfänger 7 im Bewegungsmelder 1 integriert und unmittelbar mit der Steuereinheit 2 inklusive Bewegungsmelder-Erfassungseinheit 17 verbunden. Des Weiteren können optional das Schaltglied 18 und/oder das interne Signalmittel 24 vorhanden sein.

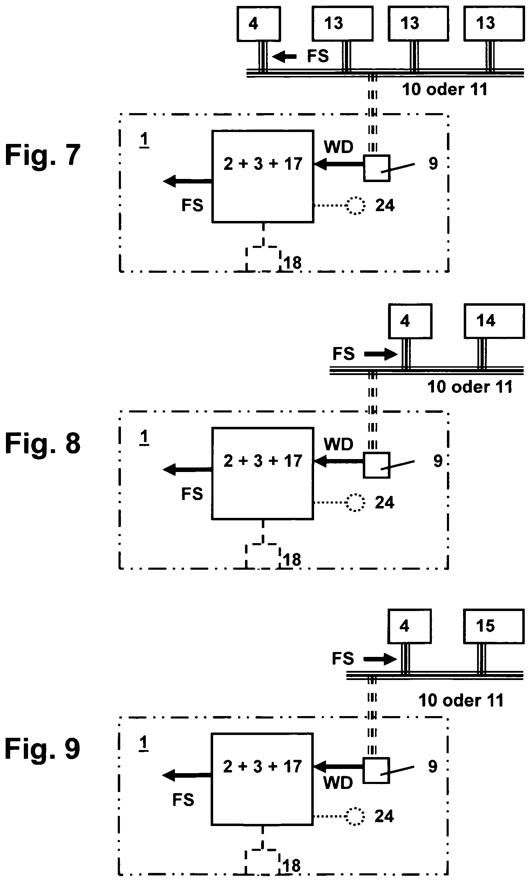

In Fig. 7 ist eine Ausführungsform mit über ein Bussystem mit dem Bewegungsmelder verbundenen externen Wettersensoren dargestellt. Bei dieser Ausführungsform ist ein Busanschluss 9 im Bewegungsmelder 1 integriert und unmittelbar mit der Steuereinheit 2 inklusive Bewegungsmelder-Erfassungseinheit 17 verbunden. Der Busanschluss 9 kommuniziert kabelgebunden mit einem kabelgebundenen Bussystem 10, wie PoE oder KNX (Hausbussystem) oder über Funk mit einem funkbasierten Bussystem 11. An das Bussystem 10 oder 11 sind Wettersensoren 13 - Temperatursensor, Luftdrucksensor und Luftfeuchtesensor - angeschlossen. Die von diesen Wettersensoren 13 erzeugten Wetterdaten WD werden der Steuereinheit 2 über das Bussystem 10 oder 11 und den Busanschluss 9 zugeleitet. Des Weiteren können optional das Schaltglied 18 und/oder das interne Signalmittel 24 vorhanden sein.

In Fig. 8 ist eine Ausführungsform mit über ein Bussystem mit dem Bewegungsmelder verbundenem Wetterdatendienst-Funkempfänger dargestellt. Bei dieser Ausführungsform ist ebenfalls der Busanschluss 9 im Bewegungsmelder 1 integriert und unmittelbar mit der Steuereinheit 2 inklusive Bewegungsmelder-Erfassungseinheit 17 verbunden. Der Busanschluss 9 kommuniziert kabelgebunden mit einem kabelgebundenen Bussystem 10, wie PoE oder KNX (Hausbussystem) oder über Funk mit einem funkbasierten Bussystem 11. An das Bussystem 10 oder 11 ist ein Wetterdatendienst-Funkempfänger 14 angeschlossen. Die vom Wetterdatendienst-Funkempfänger 14 gelieferten Wetterdaten WD werden der Steuereinheit 2 über das Bussystem 10 oder 11 und den Busanschluss 9 zugeleitet. Des Weiteren können optional das Schaltglied 18 und/oder das interne Signalmittel 24 vorhanden sein.

In Fig. 9 ist eine Ausführungsform mit über ein Bussystem mit dem Bewegungsmelder verbundenem online-Wetterdienst dargestellt. Bei dieser Ausführungsform ist ebenfalls der Busanschluss 9 im Bewegungsmelder 1 integriert und unmittelbar mit der Steuereinheit 2 inklusive Bewegungsmelder-Erfassungseinheit 17 verbunden. Der Busanschluss 9 kommuniziert kabelgebunden mit einem kabelgebundenen Bussystem 10, wie PoE oder KNX (Hausbussystem) oder über Funk mit einem funkbasierten Bussystem 11. An das Bussystem 10 oder 11 ist ein online-Wetterdienst 15 angeschlossen. Die vom online-Wetterdienst 15 gelieferten Wetterdaten WD werden der Steuereinheit 2 über das Bussystem 10 oder 11 und den Busanschluss 9 zugeleitet. Des Weiteren können optional das Schaltglied 18 und/oder das interne Signalmittel 24 vorhanden sein.

Bei den Ausführungsformen gemäß den Figuren 7, 8, 9 ist es optional auch möglich, mindestens ein externes Farblicht 4 an das kabelgebundene Bussystem 10 (Hausbussysteme, PoE, KNX) anzuschließen und mittels des Farbsignals FS über die Steuereinheit 2 und den Busanschluss 9 anzusteuern.

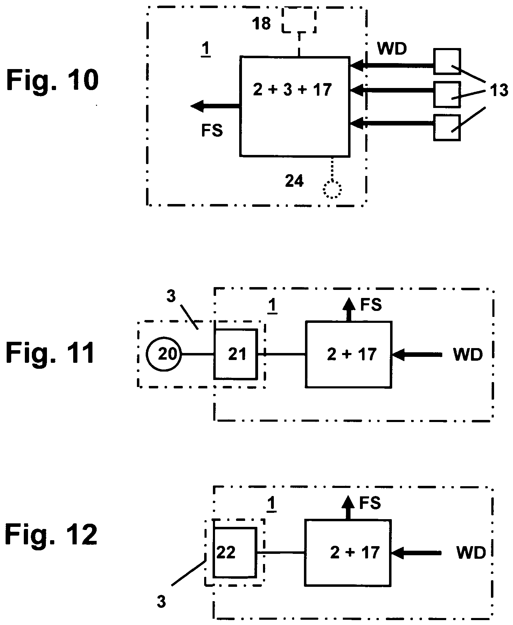

In Fig. 10 ist eine Ausführungsform mit dem Bewegungsmelder und hierzu externen Wettersensoren dargestellt. Im Unterschied zur Ausführungsform gemäß Fig. 5 weist der Bewegungsmelder 1 selbst keine Wettersensoren auf, sondern an die Steuereinheit 2 sind externe Wettersensoren 13 - Temperatursensor, Luftdrucksensor, Luftfeuchtesensor - angeschlossen, welche die Wetterdaten WD liefern. Des Weiteren können optional das Schaltglied 18 und/oder das interne Signalmittel 24 vorhanden sein.

In Fig. 11 ist eine Ausführungsform mit Spannungsversorgung aus einem 230V-Wechselspannungsnetz dargestellt. Die elektrischen und elektronischen Baukomponenten des Bewegungsmelders 1 - insbesondere die Steuereinheit 2 inklusive Bewegungsmelder-Erfassungseinheit 17 - werden über ein Netzteil 21 aus einem 230V-Wechselspannungsnetz 20 versorgt.

In Fig. 12 ist eine Spannungsversorgung mittels Batterie dargestellt. Im Unterschied zum Ausführungsbeispiel gemäß Fig. 10 dient eine Batterie 22 zur Versorgung der elektrischen und elektronischen Baukomponenten des Bewegungsmelders 1 - insbesondere die Steuereinheit 2 inklusive Bewegungsmelder-Erfassungseinheit 17.

Bei den Ausführungsformen gemäß den Figuren 7, 8, 9 kann die Spannungsversorgung auch über das kabelgebundene Bussystem 10 (Bussystemversorgung bei PoE, KNX) erfolgen.

Bei den Ausführungsformen des Bewegungsmelders 1 mit Busanschluss 9 können im Bewegungsmelder 1 integrierte Schaltglieder 18, 23 entfallen und die Schaltfunktionen werden durch mit dem Bussystem 10, 11 verbundene Aktoren übernommen.

Bei der Ansteuerung des Farblichts 4, 5 sind allgemein zwei unterschiedliche Alternativen des Bewegungsmelders 1 zu unterscheiden:
- Bei der ersten Alternative des Bewegungsmelders 1 ist das Farblicht 4, 5 mit einer unmittelbar zugeordneten Ansteuerung (Controller) versehen, welcher das Farbsignal FS zugeführt wird und welche dementsprechend die Farbe des Farblichts einstellt. Dementsprechend entfällt das Schaltglied 23. Diese Alternative trifft auch für an ein Bussystem 10, 11 angeschlossene Bewegungsmelder zu.
- Bei der zweiten Alternative des Bewegungsmelders 1 ist das Farblicht 4, 5 aus mehreren einzelnen Leuchtmitteln, vorzugsweise LEDs unterschiedlicher Farben, insbesondere Rot, Grün, Blau aufgebaut, so dass das Schaltglied 23 mehrpolig ausgebildet ist und drei unterschiedliche Schalter zum separaten Einschalten der entsprechenden farblich unterschiedlichen Leuchtmittel umfasst, d. h. je nach Farbsignal werden unterschiedliche Schalter eingeschaltet, was zur Bildung des Farblichts führt.

Wie aus der vorstehenden Beschreibung hervorgeht, wird durch die vorgeschlagene Erfindung ein Bewegungsmelder 1 geschaffen, welcher
- in einer Kombination mit einem Wetterdatendienst-Funkempfänger 7, 14 (z.B. über EFR oder DCF77 oder ähnlich - z.B. Wetterdirekt über Satellit und regionale Funksender) oder
- in einer Kombination mit integrierten oder nicht integrierten Wettersensoren 6, 13 für metrologische Werte, wie Temperatur, rel. Luftfeuchte, Luftdruck und optional Regen oder
- in Kombination mit einem Internet-basiertem Wetterdienst, wie online-Wetterdienst 15,
- die lokale Wettersituation und/oder Wetterprognose in die Gefahrenreduzierung mit einbezieht, um auf diese Art und Weise in Abhängigkeit einer detektierten Bewegung beispielsweise auf Glätte oder Eisbildung hinzuweisen.

DCF77 ist dabei ein Zeitsignal und wird auf der Normalfrequenz 77,5 kHz als Zeitinformation in kodierter Form ausgestrahlt. Darüber hinaus werden über dieses Signal auch Wetterdaten in einem gesonderten Kanal übertragen. Seit geraumer Zeit werden nicht nur über den Sender DCF77 (Langwellensender) sondern auch über HBG (Zeitübertragungsdienst) unter Anderem Wetterdaten übertragen. Es kann eine Wetterprognose über die nächsten vier Tage erhalten werden.

Weltweite Wetterstationen, Satelliten und Radargeräte erfassen permanent die globalen Wetterdaten. Professionelle Meteorologen berechnen daraus mit modernsten Methoden die unterschiedliche Wetterentwicklung von einer Vielzahl Regionen bzw. Landkreisen in Deutschland. Erstellt werden diese Prognosen von wetteronline.de, dem führenden Internetanbieter für Wetterinformationen in Europa. Die Übermittlung der Daten erfolgt mehrmals täglich per Satellit über ein spezielles Funknetz im Frequenzbereich 466 MHz. Durch die hohe Empfangssicherheit von fast 100 Prozent selbst in Gebäuden wird es auch für die Alarmierung von Feuerwehr, Rettungsdiensten und Hilfsorganisationen genutzt ("Pager-Technik").

Der vorgeschlagene Bewegungsmelder ermöglicht es, über die Farblichtgestaltung auf verschiedene Gefahrensituationen bedingt durch die Wettersituation hinzuweisen, beispielsweise auf
- Kälte und/oder Glatteis durch die Farbe Blau,
- Hitze (insbesondere durch Sonne aufgeheizten Boden und/oder Wandmaterialien) durch die Farbe Rot.

Das Farblicht 4, 5 kann in Form einer zusätzlichen Signalisierung durch beispielsweise
- Hausnummernbeleuchtung,
- Außen-Türbeleuchtung,
- Hausflurlicht,
- Wegausleuchtung und Wegbeleuchtung,
- speziell in den Boden eingelassene Beleuchtungseinrichtungen und/oder Markierungsleuchten,
- Speziell in Handläufen eingelassene Beleuchtungseinrichtungen.
ausgeprägt sein.

Die Berücksichtigung der Wettersituation kann auf unterschiedliche Arten erfolgen, womit unterschiedliche Gerätevarianten entstehen. Entsprechende Mischformen sind ebenfalls realisierbar, wodurch sich die Vorhersage/Auswertungsfähigkeiten des Gerätes durch die unterschiedlichen Bezugsquellen der Wetterdaten verbessern lassen:
A) Die im Bewegungsmelder optional integrierten Wettersensoren 6 oder die externen Wettersensoren 13, wie Temperatursensor, Luftfeuchtesensor und Luftdrucksensor sowie gegebenenfalls zusätzlich Regensensor können für eine lokale Auswertung und damit Erzeugung der Wetterdaten WD herangezogen werden.
B) Der im Bewegungsmelder optional integrierte DCF77 oder ERF-Empfänger oder allgemein Wetterdatendienst-Funkempfänger 7 dient dem Empfang von extern aufbereiteten lokalen Wetterdaten (Wetterdatendienst) und wird für eine Auswertung und damit Erzeugung der Wetterdaten WD herangezogen.
C) Die lokal geltenden Wetterdaten WD werden über das Bussystem 10, 11 von externen Wettersensoren 13 und/oder externen Wetterdatendienstempfängern, wie Wetterdatendienst-Funkempfänger 14 und/oder einem online-Wetterdienst 15 des Internets dem Bewegungsmelder 1 zugeführt.

Durch die gewählte Kombination eines Bewegungsmelders 1 mit Wetterdatenauswertung über Verfahren A) und/oder Verfahren B) und/oder Verfahren C) ist eine Signalisierung von beispielsweise Glätte oder Eisbildung direkt an der Farbsteuerung (Gerät) beispielsweise durch die Farbe Blau des internen Signalmittels (Signallämpchens) 24 in Abhängigkeit einer detektierten Bewegung möglich. Darüber hinaus ist die Ausleuchtung über das integrierte Farblicht 5 und/oder das externe Farblicht 4 (Lampe) sowie über ein über das Bussystem 10, 11 angebundenes Farblicht 4 in einer bestimmten Farbtemperatur in Abhängigkeit der Wettersituation durch Verwendung eines LED/RGB-Leuchtmittels möglich. Durch die Kombination der lokalen Auswertung von Temperatur und Regen ist der Hinweis auf eine erhöhte Gefahrensituation noch besser zu prognostizieren. Das so ermittelte Gefahrenpotential kann wiederum in die Signalisierung mittels Signalmittel 24 und/oder Ausleuchtung mittels Farblicht 4, 5 durch beispielsweise höheren Farbwertanteil, intensiveres oder blinkendes Signallicht einfließen.

Somit kann eine Person, die das Haus verlassen möchte, im Vorfeld durch indirekte Signalisierung am Farbsteuerungsgerät indirekt oder durch die farbliche oder Intensität der Ausleuchtung der Wegstrecke direkt auf das Gefahrenpotential hingewiesen werden. Gleiches gilt auch für Personen, die sich von außen her auf das Gelände begeben möchten.

Die Signalisierung einer Gefahrensituation in Abhängigkeit einer detektierten Bewegung kann dabei prinzipiell über das Schaltglied 23 an ein externes Farblicht 4 respektive externes Gerät erfolgen oder über ein integriertes Farblicht 5 (Lampe) direkt am Bewegungsmelder 1 und/oder integriertes Signalmittel 24 (Signallämpchen) erfolgen.

Selbstredend kann das aus den Wetterdaten WD gewonnene Farbsignal FS auch auf das Bussystem 10, 11 an die optional am Bewegungsmelder angeschlossenen Farblichter 4 und/oder optional angeschlossenen Lichtsteuerungssysteme übertragen werden. Hierdurch kann die Information auch auf andere Anzeigeeinheiten eines Hausbussystems weitergeleitet werden. Somit ist auch eine In-Haus-Signalisierung realisierbar, die bereits vor dem Verlassen des Gebäudes auf den Wegzustand außerhalb des Hauses hinweist.

### Bezugszeichenliste

- 1: Bewegungsmelder
- 2: Steuereinheit
- 3: Spannungsversorgung
- 4: externes Farblicht (LED/RGB-Leuchtmittel)
- 5: integriertes Farblicht (LED/RGB-Leuchtmittel)
- 6: integrierte Wettersensoren (Temperatursensor, Luftfeuchtigkeitssensor, Luftdrucksensor, optional Regensensor)
- 7: Wetterdatendienst-Funkempfänger
- 8: -
- 9: Busanschluss (kabelgebunden oder Funk)
- 10: kabelgebundenes Bussystem (PoE, KNX, DALI)
- 11: funkbasiertes Bussystem
- 12: -
- 13: externe Wettersensoren (Temperatursensor, Luftfeuchtigkeitssensor, Luftdrucksensor, optional Regensensor)
- 14: Wetterdatendienst-Funkempfänger
- 15: online-Wetterdienst
- 16: -
- 17: Bewegungsmelder-Erfassungseinheit mit Optik/Spiegel, Bewegungssensor, Tageslichtsensor, Dämmerungsschalter und Zeitglied
- 18: Schaltglied zur Auslösung einer Schalthandlung unabhängig von Wetterdaten, wie z. B. Alarmauslösung, Einbruchmeldung, Lüftung/Heizungs-Ansteuerung, Kamera-Aktivierung usw.
- 19: -
- 20: 230V-Wechselspannungsnetz
- 21: Netzteil
- 22: Batterie
- 23: Schaltglied zur Auslösung einer Schalthandlung abhängig von Wetterdaten: Ansteuerung von Farblicht
- 24: internes Signalmittel (Signallampe, LED, RGB)

- WD: Wetterdaten
- FS: Farbsignal

## Patentansprüche

1. Bewegungsmelder (1) mit Wetterdatenauswertung, mit einer Bewegungsmelder-Erfassungseinheit (17) und einer Steuereinheit (2), welche an eine Spannungsversorgung (3) angeschlossen sind,
• wobei die Steuereinheit (2) in Abhängigkeit von eingangsseitig zugeführten Wetterdaten (WD) ein Farbsignal (FS) für die in Abhängigkeit einer detektierten Bewegung erfolgende Ansteuerung mindestens eines Farblichts (4, 5) erzeugt, und das Farblicht in Form eines LED/RGB-Leuchtmittels inklusive zugehörigem Controller ausgebildet ist, wobei
• die Wetterdaten (WD) zumindest die aktuelle Temperatur, den aktuellen Luftdruck, die aktuelle Luftfeuchtigkeit und Prognosewerte für die zukünftige Entwicklung dieser Werte beinhalten, welche auf den Werten der Vergangenheit basieren,
• eine Erzeugung der Wetterdaten (WD) mit Hilfe von Wettersensoren (6, 13), erfolgt, und
• die Wettersensoren (6, 13) mit der Bewegungsmelder-Erfassungseinheit (17), der Steuereinheit (2) und der Spannungsversorgung (3) in einem einzigen Gerät angeordnet sind.

2. Bewegungsmelder (1) nach Anspruch 1, wobei die Erzeugung der Wetterdaten (WD) mit Hilfe von Wettersensoren (6, 13), wie Temperatursensor, Luftfeuchtigkeitssensor und Luftdrucksensor sowie optional Regensensor erfolgt.

3. Bewegungsmelder (1) nach Anspruch 1 oder 2, **gekennzeichnet durch** eine Erzeugung/Bereitstellung der Wetterdaten (WD) mit Hilfe mindestens eines Wetterdatendienst-Funkempfängers (7, 14).

4. Bewegungsmelder (1) nach Anspruch 1 oder 2, **gekennzeichnet durch** eine Erzeugung/Bereitstellung der Wetterdaten (WD) mit Hilfe eines online-Wetterdienstes (15).

5. Bewegungsmelder (1) nach mindestens einem der vorstehenden Ansprüche, **gekennzeichnet durch** einen Empfang der Wetterdaten (WD) über ein kabelgebundenes Bussystem (10) oder über ein funkbasiertes Bussystem (11) über einen Busanschluss (9).

6. Bewegungsmelder (1) nach mindestens einem der vorstehenden Ansprüche, **gekennzeichnet durch** eine Ansteuerung des mindestens einen Farblichts (4) mit dem Farbsignal (FS) über einen Busanschluss (9) und über ein kabelgebundenes Bussystem (10).

7. Bewegungsmelder (1) nach mindestens einem der vorstehenden Ansprüche, **gekennzeichnet durch** ein zwischen der Steuereinheit (2) und dem mindestens einen Farblicht (4) angeordnetes Schaltglied (23).

8. Bewegungsmelder (1) nach mindestens einem der vorstehenden Ansprüche, **gekennzeichnet durch** ein Schaltglied (18) zur Auslösung in Abhängigkeit einer detektierten Bewegung und unabhängig von Wetterdaten (WD).

## Claims

1. Motion sensor (1) with weather data evaluation, having a motion sensor capture unit (17) and a control unit (2) which are connected to a voltage supply (3),
• wherein the control unit (2), on the basis of weather data (WD) supplied to the input, generates a colour signal (FS) for the control of at least one colour light (4, 5), which control is carried out on the basis of a detected movement, and the colour light is in the form of an LED/RGB luminous means including an associated controller,
wherein
• the weather data (WD) comprise at least the current temperature, the current air pressure, the current humidity and predicted values for the future development of these values which are based on the past values,
• the weather data (WD) are generated with the aid of weather sensors (6, 13), and
• the weather sensors (6, 13) are arranged with the motion sensor capture unit (17), the control unit (2) and the voltage supply (3) in a single device.

2. Motion sensor (1) according to Claim 1, wherein the weather data (WD) are generated with the aid of weather sensors (6, 13) such as a temperature sensor, a humidity sensor and an air pressure sensor and optionally a rain sensor.

3. Motion sensor (1) according to Claim 1 or 2, **characterized by** generation/provision of the weather data (WD) with the aid of at least one weather data service radio receiver (7, 14).

4. Motion sensor (1) according to Claim 1 or 2, **characterized by** generation/provision of the weather data (WD) with the aid of an online weather service (15).

5. Motion sensor (1) according to at least one of the preceding claims, **characterized by** reception of the weather data (WD) via a wired bus system (10) or via a radio-based bus system (11) via a bus connection (9).

6. Motion sensor (1) according to at least one of the preceding claims, **characterized by** control of the at least one colour light (4) with the colour signal (FS) via a bus connection (9) and via a wired bus system (10).

7. Motion sensor (1) according to at least one of the preceding claims, **characterized by** a switching element (23) arranged between the control unit (2) and the at least one colour light (4).

8. Motion sensor (1) according to at least one of the preceding claims, **characterized by** a switching element (18) for triggering on the basis of a detected movement and independently of weather data (WD).

## Revendications

1. Avertisseur de mouvement (1) avec interprétation des données météorologiques, comprenant une unité de détection d'avertisseur de mouvement (17) et une unité de commande (2) qui sont raccordées à une alimentation électrique (3),
* l'unité de commande (2) générant un signal de couleur (FS) en fonction des données météorologiques (WD) acheminées du côté de l'entrée pour l'excitation d'au moins un feu coloré (4, 5) effectuée en fonction d'un mouvement détecté, et le feu coloré est réalisé sous la forme d'un moyen lumineux à LED/RGB, y compris le contrôleur associé,
* les données météorologiques (WD) contenant au moins la température actuelle, la pression atmosphérique actuelle, l'humidité de l'air actuelle et des valeurs prévisionnelles pour la future évolution de ces valeurs, lesquelles se basent sur les valeurs du passé,
* une génération des données météorologiques (WD) est effectuée à l'aide de capteurs météorologiques (6, 13), et
* les capteurs météorologiques (6, 13) sont disposés dans un appareil unique avec l'unité de détection d'avertisseur de mouvement (17), l'unité de commande (2) et l'alimentation électrique (3).

2. Avertisseur de mouvement (1) selon la revendication 1, la génération des données météorologiques (WD) étant effectuée à l'aide de capteurs météorologiques (6, 13) tels qu'un capteur de température, un capteur d'humidité de l'air et un capteur de pression atmosphérique ainsi qu'un capteur de pluie optionnel.

3. Avertisseur de mouvement (1) selon la revendication 1 ou 2, **caractérisé par** une génération/mise à disposition des données météorologiques (WD) à l'aide d'au moins unrécepteur radioélectrique de service de données météorologiques (7, 14).

4. Avertisseur de mouvement (1) selon la revendication 1 ou 2, **caractérisé par** une génération/mise à disposition des données météorologiques (WD) à l'aide d'un service météorologique en ligne (15).

5. Avertisseur de mouvement (1) selon l'une des revendications précédentes, **caractérisé par** une réception des données météorologiques (WD) par le biais d'un système de bus filaire (10) ou par le biais d'un système de bus radioélectrique (11) par le biais d'une borne de bus (9).

6. Avertisseur de mouvement (1) selon l'une des revendications précédentes, **caractérisé par** une excitation de l'au moins un feu coloré (4) avec le signal de couleur (FS) par le biais d'une borne de bus (9) et par le biais d'un système de bus filaire (10).

7. Avertisseur de mouvement (1) selon l'une des revendications précédentes, **caractérisé par** un élément de commutation (23) disposé entre l'unité de commande (2) et l'au moins un feu coloré (4).

8. Avertisseur de mouvement (1) selon l'une des revendications précédentes, **caractérisé par** un élément de commutation (18) destiné à se déclencher en fonction d'un mouvement détecté et indépendamment des données météorologiques (WD).
